# EUROPEAN PATENT SPECIFICATION

(11) **EP 0 739 476 B1**
(45) Date of publication and mention of the grant of the patent: **11.08.1999**
(21) Application number: 95903610.4
(22) Date of filing: 25.11.1994
(51) Int. Cl.: G01J 5/06, F28F 27/00

(54) **HOT SPOT DETECTION IN ROTARY REGENERATIVE HEAT EXCHANGERS**
DETEKTION VON WARMEN STELLEN VON ROTIERENDEN REGENERATIVEN WÄRMETAUSCHERN
DETECTION DES POINTS CHAUDS DANS DES ECHANGEURS THERMIQUES A RECUPERATION DE CHALEUR

(30) Priority: 13.01.1994 US 180667
(43) Date of publication of application: 30.10.1996
(73) Proprietor: ABB AIR PREHEATER, INC., Wellsville, NY 14895 (US)
(72) Inventor: BRZYTWA, Tadek, Casimir, Wellsville, NY 14895 (US)
(74) Representative: Miller, Toivo
(86) International application number: US9413607
(87) International publication number: WO9519555

(56) References cited:
- EP-A- 0 545 021
- WO-A-94/00950
- US-A- 3 730 259
- PATENT ABSTRACTS OF JAPAN vol. 18, no. 336 (E-1568) 24 June 1994 & JP,A,06 085 122 (FUJITSU LTD) 25 March 1994

## Description

### Background of the Invention

The present invention relates to the detection of hot spots in rotary regenerative air preheaters and specifically to a thermal imaging system using infrared detectors having improved temperature control.

Rotary regenerative air preheaters are commonly used to transfer heat from the flue gases exiting a furnace to the incoming combustion air. Fires in such air preheaters most often occur during cold start-up or a start-up following hot standby. These fires occur because of poor combustion of the fuel which results in unburned or partially burned fuel condensing and depositing on the air preheater element. As the temperatures entering the air preheater increase, the deposit becomes baked to a hard varnish-like material. This baking takes place in the 205 to 260°C (400 to 500°F) temperature range and these deposits can ignite as temperatures increase to the 315 to 370°C (600 to 700°F) range. Ignition usually starts in a small area of the deposit and the operators may often be unaware that a fire has occurred. During the initial stages of ignition, external effects may not be apparent. The deposit has restricted the flow of gas or air so that little of the excess heat generated is carried away and downstream mixing of the fluids minimized the external effects and masks the existence of the fire. The heat generated is absorbed by the metal heat transfer element in the local of the fire. Actual temperature buildup may be relatively slow. If the hot spot can be detected early, the amount of water required to quench below the ignition temperature will not be excessive. However, if there is no early detection, the metal heat transfer surfaces will continue to increase to the point where the metal itself may ignite. This can occur at about 705°C (1300°F) and then temperatures can increase rapidly to 1650°C (3000°F) or more in a matter of minutes. Such metal fires are self-sustaining and require large quantities of water to drop the temperature to a reasonable level. Fire extinguishers other than water such as carbon dioxide and halon and others are ineffective because they lack a cooling effect.

In order to prevent fires from occurring, systems have been developed for detecting overheating conditions (hot spots) and trigger an alarm. Although devices such as thermocouples, various thermistors and ultraviolet detectors have been tried or used, the preferred system employs an infrared detector because of its rapid response time and sensitivity to small changes in the background temperature. A six-inch diameter hot spot in the rotating heat transfer surface of an air preheater will pass a given point in from 150 to 1000 milliseconds and the response time of an infrared detector can be less than 100 milliseconds with present-day high speed solid state electronics. The sensitivity can be adjustable but might be set to trigger an alarm when hot spots at 95 to 150°C (200 to 300°F) above the flue gas inlet temperature are detected.

EP-A-0 545 021 discloses a control system for regulating the temperature of a heat detector disposed on a rotary regenerative air preheater. The control system includes a temperature detector for determining the temperature of a hot spot sensor and separate non-liquid heating and cooling means for respectively heating or cooling the temperature detector to thereby maintain the temperature within a desired temperature range.

US-A-3 730 259 discloses a detector for detecting infrared rays reflected from a hot spot on a rotor of a rotary regenerative air preheater. A cooling system includes tubes carrying cooling fluid through the housing in which the detector is housed to thereby cool the detector.

One of the problems with present-day infrared detectors involves temperature control of the detector. The stability and accuracy of the output signal from the detector is directly related to the temperature of the detector. In present systems, the detector is mounted onto a heat sink in an open environment exposing it to moisture and contaminants which can cause degradation of the detector and consequent loss of performance. Further, the heat sink is water cooled, using inlet water which can vary significantly in temperature. This then affects the stability of the detector output signal which is critical for system performance. Also, if the inlet cooling water temperature becomes too high, the inadequate heat removal can result in permanent damage to the detector.

### Summary of the Invention

An object of the present invention is to provide a system for maintaining the temperature of a detector within set limits and more particularly for maintaining the infrared detectors of a hot spot detector system in a rotary regenerative air preheater at a desired temperature. The invention involves the use of thermoelectric coolers, thermistors, heat sinks and cooling water.

### Brief Description of the Drawings

Figure 1 is a cross section view of a rotary regenerative air preheater incorporating the present invention.

Figure 2 is a bottom view of the air preheater of Figure 1 showing a plurality of infrared sensors mounted to scan the rotor.

Figure 3 is a cross section view through a sensor drive assembly.

Figure 4 is a cross section view of a sensor module according to the present invention.

Figure 5 is a diagram of the sensor module mounted in a heat sink.

### Description of the Preferred Embodiment

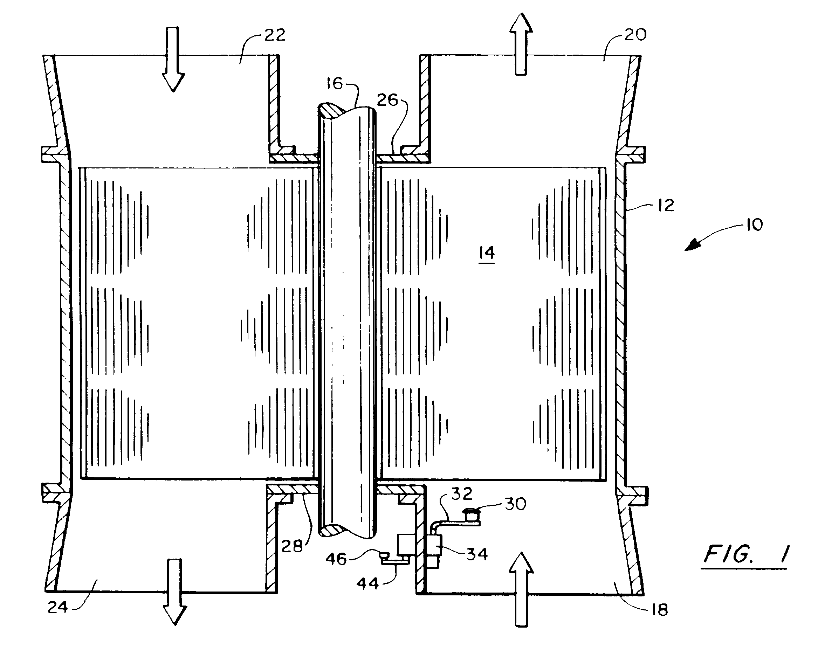

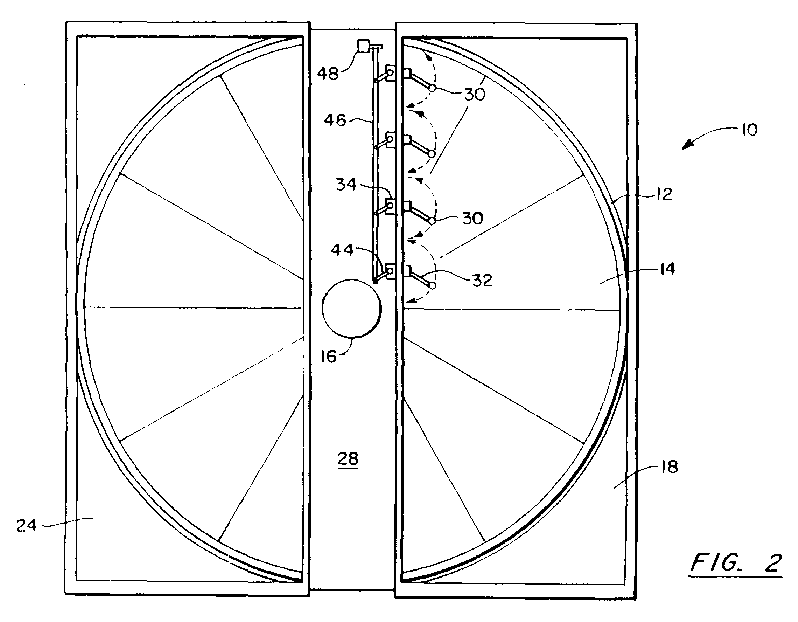

Illustrated in Figures 1 and 2 is a typical rotary regenerative air preheater 10 comprising a cylindrical casing 12, a rotor 14 containing conventional heat exchange surface and mounted for rotation on the shaft 16, an air inlet duct 18, an air outlet duct 20, a flue gas inlet duct 22 and a flue gas outlet duct 24. Extending across the casing 12 adjacent the upper and lower faces of the rotor 14 are the sector plates 26 and 28 which divide the unit into the air side and the flue gas side. The arrows indicate the direction of air and flue gas flow. The flue gas entering through duct 22 transfers heat to the heat exchange surface of the rotor. AS the rotor continuously turns, the hot heat exchange surface is rotated into the air side where the heat is transferred to the air.

The hot spot detection system of the present invention is located in the air inlet duct of the air preheater as shown in Figure 1. As many as four sensors as shown in Figure 2 may be required depending on the rotor diameter. The sensor heads 30 are mounted on swinging arms 32 such that the sensors swing through an arc of approximately 180°. The path of the sensors is shown in Figure 2 by the dotted arcs. It can be seen that full coverage of the radius of the rotor is obtained by the swinging sensors. Under normal air preheater operating conditions, a complete transverse scanning of the rotor is accomplished in approximately 10 minutes.

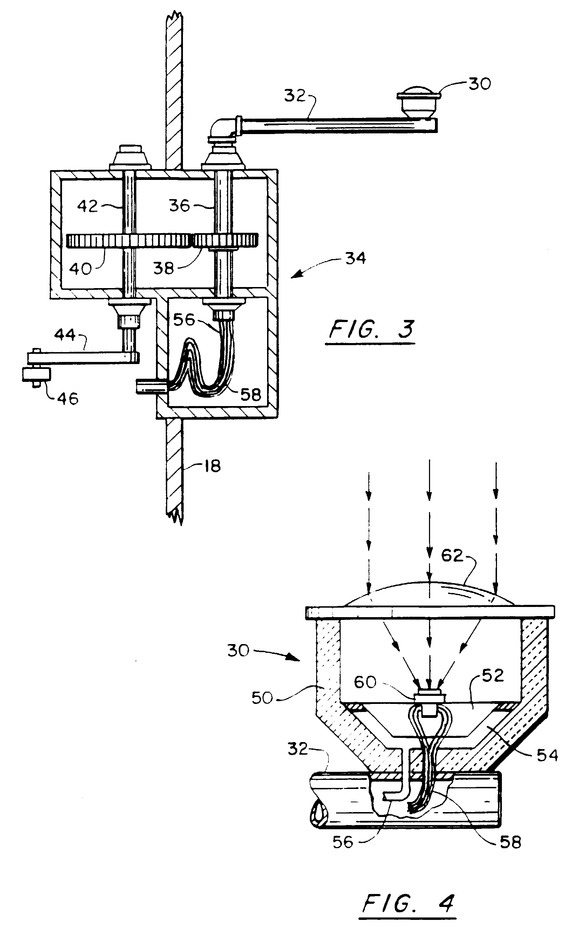

Details of the sensor drive assembly 34 mounted through the wall of the air inlet duct 18 are shown in Figure 3. The swinging arm 32 is mounted on a hollow shaft 36. This shaft 36 is rotatable and has a gear 38 mounted thereon. Engaging the gear 38 is the gear 40 mounted on shaft 42. Attached to shaft 42 is a lever arm 44 with the other end of the lever arm 44 being connected to the linkage bar 46. This linkage bar 46 is connected to the lever arms 44 of the other drive assemblies and to the drive motor 48 shown in Figure 2. This drive motor is adapted to reciprocate the linkage bar 46 in a known manner thus rotating the lever arms 44 and swinging arms 32 back and forth through the 180° arc.

The sensor heads 30 are shown in more detail in Figure 4. Each sensor head comprises an insulated housing 50 in which is mounted a heat sink 52 preferably formed of aluminum. Surrounding the heat sink 52 is a space 54 for circulating cooling water which is channeled into and out of the space 54 by the tubes 56, one of which is shown in Figure 4. These water tubes pass out through the arm 32 and 36 as do the electrical leads 58. Mounted on the heat sink 52 is the detector module 60 which will be explained in more detail hereinafter. Covering the sensor head 30 is a cover 62 which includes a lens to focus the infrared radiant energy onto the detector module 60 as illustrated by the radiant energy line shown in Figure 4.

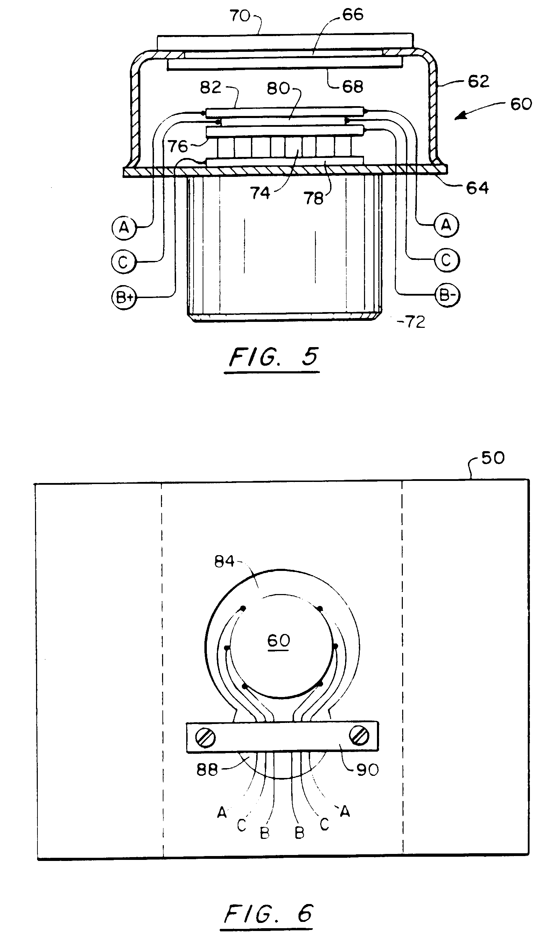

The detector module 60 as shown in Figure 5 comprises a housing can 62 which is attached to a housing base 64. In top of the housing can 62 is a window opening 66 which has a sapphire window 68 sealed to the inside of the housing can 62 with epoxy adhesive. Mounted over the window opening by epoxy adhesive is a glass filter 70 for filtering out visible and ultraviolet radiation. The can is mounted on the cylindrical copper heat sink 72 with the base 64 being soldered to the heat sink. The sealed housing protects the detector from moisture and contaminants which could cause degradation of the detector and the loss of performance. The housing is preferably evacuated and filled with an inert gas. Mounted inside of the can on the base 64 by soldering is a thermoelectric cooler 74 for the purpose of cooling the infrared detector. The thermoelectric cooler consists of the cold plate 76 and the hot plate 78. The thermoelectric cooler can also be used to heat but it will be referred to herein as a cooler. Mounted on top of the thermoelectric cooler 74 is a thermistor 80 and a lead sulfide infrared detector plate 82. These are bonded together with epoxy adhesive. The thermistor monitors the detector temperature in a known manner and is connected in with a known bi-polar temperature control circuit for the thermoelectric cooler by means of the leads C-C to maintain this temperature within set limits.

Mounted on top of this thermistor 80 is the lead sulfide detector plate 82. The infrared radiation from a flame in the air preheater produces an electrical output from this plate which appears across the output leads A-A. The leads B-B are connected to the thermoelectric cooler 74 and are also connected in with the temperature control circuit for the detector plate 82. All of the wire leads pass through holes in the bottom of the can which are then sealed with glass.

As shown in Figure 6, the module 60 is mounted in the aluminum heat sink 50 which is mounted on the swing arms 32. This heat sink 52 has a hole 84 in which the module 60 is mounted. A thin coating of thermal grease which is non-electrical conducting, is applied to the wall and bottom of the hole 84. The clearance between the hole 84 and the copper heat sink 72 is a small, on the order of 0.0025 inches, such that the grease holds the module in place and efficiently conducts heat. The wire leads A-A, B-B and C-C exit the module through the relief area 88 and are held in place by the wire retainer strap 90 which also helps secure the module in place.

In operation, the thermistor 80 detects the temperature of the detector plate 82 and controls the operation of the thermoelectric cooler 74 to maintain the detector plate 82 within a desired temperature range. The output of the detector plate 82 is connected in with any desired known alarm system or graphic display. The variation of the detector operating temperature may be ≠ 2% of the setpoint as an example. This will allow the detector to be operated at its optimum temperature range and provide for long life. It also provides for detector output signal stability and sensitivity which are critical for accuracy.

## Claims

1. In an infrared hot spot detection system for a rotary regenerative air preheater (10) operable to scan the rotor (14) of the rotary regenerative air preheater (10) to detect hot spots thereon and having a control system for regulating the temperature of the infrared heat detector including temperature sensing means for sensing the temperature of the infrared heat detector and heating and cooling means for controllably heating or cooling the infrared heat detector so as to maintain the temperature thereof within a predetermined temperature range defined by a maximum temperature and a minimum temperature, an infrared heat detector module (60) comprising:
a. a water cooled heat sink (52);
b. a thermoelectric cooler (74) mounted on said heat sink (52) having the hot plate (78) of said thermoelectric cooler (74) connected to said heat sink (52) and the cold plate (76) remote from said heat sink (52), said thermoelectric cooler (74) being wired to remove heat from said cold plate (76);
c. an infrared detector plate (82) mounted in heat transfer relationship to said thermoelectric cooler (74); and
d. a thermistor (80) mounted between said cold plate (76) of said thermoelectric cooler (74) and said infrared detector plate (82), said thermistor (80) being wired to monitor the temperature of said infrared detector plate (82) and control the operation of said thermoelectric cooler (74) to maintain said infrared detector plate (82) within a selected temperature range.

2. In an infrared hot spot detection system for a rotary regenerative air preheater (10), the improved infrared heat detector module (60) according to claim 1 wherein said infrared detector module (60) further includes a sealed housing (62, 64) containing said thermoelectric cooler (74), said infrared detector plate (82), and said thermistor (80), said housing (62, 64) being mounted on said heat sink (52) and including a filter (70) for visible and ultraviolet radiation.

## Patentansprüche

1. In einem Infrarotheißstellenerfassungssystem für einen regenerativen Drehluftvorwärmer (10), das zur Abtastung des Rotors (14) des regenerativen Drehluftvorwärmers (10) zur Erfassung von Heißstellen daran betrieben werden kann und ein Regelungssystem zur Regulierung der Temperatur des Infrarotwärmedetektors mit einem Temperaturerfassungsmittel zur Erfassung der Temperatur des Infrarotwärmedetektors und Heiz- und Kühlmitteln zur steuerbaren Erwärmung oder Abkühlung des Infrarotwärmedetektors, um seine Temperatur in einem vorbestimmten, durch eine Höchst- und Mindesttemperatur definierten Temperaturbereich zu halten, aufweist, ein Infrarotwärmedetektormodul (60), das folgendes umfaßt:
a. einen wassergekühlten Kühlkörper (52);
b. einen an dem Kühlkörper (52) angebrachten thermoelektrischen Kühler (74), wobei die Warmplatte (78) des thermoelektrischen Kühlers (74) mit dem Kühlkörper (52) verbunden ist und die Kaltplatte (76) von dem Kühlkörper (52) entfernt liegt, wobei der thermoelektrische Kühler (74) zur Abführung von Wärme von der Kaltplatte (76) geschaltet ist;
c. eine Infrarotdetektorplatte (82), die in Wärmeübertragungsbeziehung an dem thermoelektrischen Kühler (74) angebracht ist; und
d. einen Thermistor (80), der zwischen der Kaltplatte (76) des thermoelektrischen Kühlers (74) und der Infrarotdetektorplatte (82) angebracht ist, wobei der Thermistor (80) zur Überwachung der Temperatur der Infrarotdetektorplatte (82) und Steuerung des Betriebs des thermoelektrischen Kühlers (74) geschaltet ist, um die Infrarotdetektorplatte (82) in einem gewählten Temperaturbereich zu halten.

2. In einem Infrarotheißstellenerfassungssystem für einen regenerativen Drehluftvorwärmer (10), das verbesserte Infrarotwärmedetektormodul (60) nach Anspruch 1, wobei das Infrarotdetektormodul (60) weiterhin ein abgedichtetes Gehäuse (62, 64) enthält, das den thermoelektrischen Kühler (74), die Infrarotdetektorplatte (82) und den Thermistor (80) enthält, wobei das Gehäuse (62, 64) an dem Kühlkörper (52) angebracht ist und ein Filter (70) für sichtbare und ultraviolette Strahlung enthält.

## Revendications

1. Dans un système de détection infrarouge de points chauds pour un préchauffeur d'air à récupération de chaleur rotatif (10) utilisable pour balayer le rotor (14) du préchauffeur d'air à récupération de chaleur rotatif (10) pour détecter des points chauds sur celui-ci, et ayant un système de régulation pour régler la température du détecteur de chaleur infrarouge comportant un moyen de captage de la température pour capter la température du détecteur de chaleur infrarouge et des moyens de chauffage et de refroidissement pour chauffer ou refroidir de manière réglable le détecteur de chaleur infrarouge de manière à maintenir sa température dans une plage de températures prédéterminée définie par une température maximale et une température minimale, module de détecteur de chaleur infrarouge (60) comprenant:
a. un puits de chaleur refroidi à l'eau (52);
b. un refroidisseur thermoélectrique (74) monté sur ledit puits de chaleur (52), la plaque chaude (78) dudit refroidisseur thermoélectrique (74) étant connectée audit puits de chaleur (52) et la plaque froide (76) étant éloignée dudit puits de chaleur (52), ledit refroidisseur thermoélectrique (74) étant câblé pour éliminer la chaleur de ladite plaque froide (76);
c. une plaque de détecteur infrarouge (82) montée en relation de transfert thermique avec ledit refroidisseur thermoélectrique (74); et
d. un thermistor (80) monté entre ladite plaque froide (76) dudit refroidisseur thermoélectrique (74) et ladite plaque de détecteur infrarouge (82), ledit thermistor (80) étant câblé de manière à contrôler la température de ladite plaque de détecteur infrarouge (82) et à réguler le fonctionnement dudit refroidisseur thermoélectrique (74) afin de maintenir ladite plaque de détecteur infrarouge (82) dans une plage de températures sélectionnée.

2. Dans un système de détection de points chauds infrarouge pour un préchauffeur d'air à récupération de chaleur rotatif (10), module de détecteur de chaleur infrarouge amélioré (60) selon la revendication 1, dans lequel ledit module de détecteur infrarouge (60) comporte en outre un boîtier scellé (62, 64) contenant ledit refroidisseur thermoélectrique (74), ladite plaque de détecteur infrarouge (82) et ledit thermistor (80), ledit boîtier (62, 64) étant monté sur ledit puits de chaleur (52) et comportant un filtre (70) pour les rayonnements visibles et ultraviolets.
